# EUROPEAN PATENT APPLICATION

(11) **EP 4 761 063 A1**
(43) Date of publication of application: **17.06.2026**
(21) Application number: 25203999.5
(22) Date of filing: 23.09.2025
(51) Int. Cl.: H02K 1/14, H02K 3/487, H02K 9/22, H02K 15/13, H02K 15/122

(54) **MOTOR-STATOR CONFIGURATION WITH LAMINATE FOOT KEY**

(30) Priority: 12.12.2024 US 202418979241
(71) Applicant: Honeywell International Inc., Charlotte, NC 28202 (US)
(72) Inventor: PECK, James, Charlotte, 28202 (US); DIETRICH, Robert A., Charlotte, 28202 (US); OLAVESON, Richard, Charlotte, 28202 (US)
(74) Representative: Ingrassia, Fisher & Lorenz UK Ltd.

(57) **Abstract**

A motor-stator assembly (100) comprises a stator structure (110) including a laminated yoke (112), and a plurality of laminated teeth (114) extending inwardly from an inner surface of said yoke. A distal end of each said teeth (114) includes a key structure (116). A set of stator windings (120) surrounds each of said teeth. Each of a plurality of laminate feet (124) comprises a key groove (125) able to engage with a key structure (116) of one of said teeth (114), such that the stator structure (110) has a tooth-foot-key-interface arrangement. Each of said stator windings (120) is secured between the yoke and one of said feet (124). Further the tooth-foot-key-interface arrangement is able to increase the thermal resistance in a first heat path (140) between teeth (114) and feet (124) and decrease a thermal resistance in a second heat path (142) between teeth (114) and yoke (112).

## Description

This invention was made with Government support under DE-AR0001354 awarded by U.S. Department of Energy - Advanced Research Project Agency - Energy (ARPA-E). The Government has certain rights in the invention.

### BACKGROUND

Electric motors for aviation propulsion need high power outputs and power densities for use in practical applications. Current motor technology capable of meeting these needs often utilizes a brushless motor design with rotating magnets, secured by a composite rotor sleeve that is not electrically conductive, encompassed by a stationary stator that includes conductive windings and a conductive laminate assembly to direct an electro-magnetic field to the magnets. A heat sink is typically attached to the outer radii of the laminate assembly to remove heat. Conventional stator laminate designs typically have a continuous single construction of a back and teeth.

For larger motors, a two-piece interlocking back and tooth arrangement for the stator can be implemented. In these arrangements, each tooth includes an integral foot at the inner radii, to secure the motor windings in place and direct the electro-magnetic field as desired between the stator and rotor. The two-piece arrangement allows for assembly of the stator where the winding is placed onto the tooth, and the tooth/winding assembly is inserted into the laminate back.

To achieve desired power requirements and densities using a two-piece interlocking brushless design, the electro-magnetic losses in the motor windings, stator laminate, and magnet are enough to push the temperature of the composite rotor sleeve above its limit during a high-power takeoff to a low-power cruise maneuver with a conventional stator assembly design. At a takeoff condition (high-power takeoff, climb, to low-power cruise), heat is generated in the stator assembly and builds up before it is removed by the heat sink, raising the temperature of the stator assembly. Some of this heat flows through the gap between the stator and rotor (an un-desirable heat path), which heats up the composite rotor sleeve before the heat can be removed from the stator by the heat sink.

Conventional laminate designs, which use a key interface between each tooth and the back, create resistance to heat transfer out of the stator (a desirable heat path). This prevents heat from being removed at a fast enough rate to maintain desired rotor sleeve temperatures during a takeoff cycle. The temperature of the rotor sleeve could be reduced with more cooling flow-through or surface area in the heat sink. However, both of these solutions come at the cost of added weight in the heat sink design or by addition of a fan/impellor to move additional airflow (also requiring more power draw from the entire system).

### SUMMARY

A motor-stator assembly comprises a stator structure including a laminate back, and a plurality of laminate teeth extending inwardly from an inner surface of the laminate back, with a distal end of each of the laminate teeth including a respective key structure. A set of stator windings respectively surrounds each of the laminate teeth. A plurality of laminate feet each have a respective key groove that is engaged with the respective key structure of each of the laminate teeth, such that the stator structure has a tooth/foot key interface arrangement. The stator windings are respectively secured between the laminate back and the laminate feet. The tooth/foot key interface arrangement is configured to increase a thermal resistance in a first heat path toward the laminate feet, and decrease a thermal resistance in a second heat path toward the laminate back.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a partial axial view of a motor-stator mechanism for an electric motor, according to one embodiment;
Figure 2 is a partial axial view of a conventional stator laminate, for use in a motor-stator mechanism of an electric motor;
Figure 3 is a partial axial view of a stator laminate, for use in a motor-stator mechanism of an electric motor, according to one embodiment; and
Figures 4A-4C illustrate an exemplary method for assembling a stator for a motor-stator mechanism of an electric motor.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

Embodiments of a motor-stator mechanism with a laminate foot key arrangement, and methods of assembly thereof, are described herein.

The motor-stator mechanism generally includes a stator assembly having a laminate back, and a plurality of laminate teeth integrally formed with and extending from the laminate back. A distal end of each of the laminate teeth includes a laminate key structure. A set of stator windings, such as conductive wires, respectively surround each of the laminate teeth. A plurality of laminate feet are respectively engaged with the key structures of the laminate teeth in a tooth/foot key interface arrangement, such that the stator windings are respectively secured between the laminate back and the laminate feet. The key interface arrangement is configured to increase a thermal resistance in a heat path toward the laminate feet, and decrease a thermal resistance in a heat path toward the laminate back. This reduces an operating temperature and increases a power density of an electric motor operated with the motor-stator mechanism.

The construction of a stator assembly can be done by sliding stator windings onto the laminate teeth extending from the laminate back. The laminate feet are then coupled with the laminate teeth to hold the stator assembly together.

In forming the stator assembly, a stator laminate is cut, stacked, and coated in a conventional manner for electric motor stator laminates, but with the geometry having a continuous laminate back and tooth configuration, and separate laminate feet. The laminate feet each have a cut key geometry, which allows the laminate feet to slide onto the key structures of the laminate teeth. This tooth/foot key interface arrangement secures the stator windings from travelling radially inward, and provides a path for electro-magnetic currents created by the windings to affect magnets in a rotor associated with the stator assembly.

The laminate key surfaces of the key interface arrangement are designed to prevent movement of the laminate feet relative to the laminate teeth in radial (*r*) and circumferential (*theta*) directions. Additionally, the perpendicular distance between any of the laminate key surfaces of both the laminate teeth and the laminate feet is smaller than the gap between the laminate feet and the outer surface of the rotor, to ensure electro-magnetic losses due to gaps between the laminate feet and laminate teeth are minimized.

The tooth/foot key interface arrangement, which creates the separate laminate foot and continuous laminate back and tooth, allows a thermal resistance for heat removal out of the laminate to be reduced. Furthermore, the thermal resistance is added where it is not desirable for heat to flow, between the bulk of the laminate and a composite rotor sleeve, to more effectively prevent the heat from reaching the rotor sleeve. This benefit comes at no additional weight to the stator assembly and no additional power draw. This benefit also allows the rotor sleeve to be kept at a lower temperature compared to conventional laminate/key configurations during an aircraft takeoff maneuver (high-power takeoff, climb, to low-power cruise).

Therefore, a motor can be designed with a larger power output at a weight comparable to a design using a conventional two-piece interlocking laminate/key design, and/or weight can be reduced in the heat sink for a comparable power level. The present approach also allows for higher power-to-weight ratios in aviation electric propulsion motors.

Further details of various embodiments are described hereafter and with reference to the drawings.

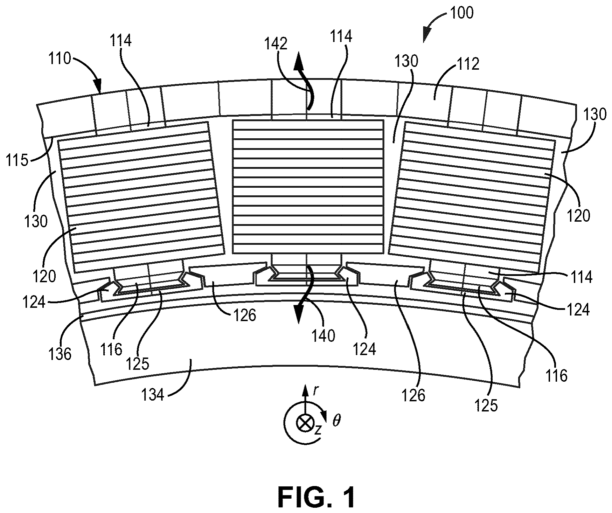

Figure 1 illustrates a partial axial view of a motor-stator mechanism 100 for an electric motor, according to one embodiment. The motor-stator mechanism 100 includes a stator structure 110 having a laminate back 112, which extends circumferentially around a perimeter of the stator structure 110. A plurality of laminate teeth 114 extend radially inward from an inner surface 115 of the laminate back 112. A distal end of each of the laminate teeth 114 includes a respective key structure 116. A set of stator windings 120 respectively surround each of the laminate teeth 114.

A plurality of laminate feet 124 each have a respective key groove 125 that is engaged with the respective key structure 116 of each of the laminate teeth 114, such that the stator structure 110 has a tooth/foot key interface arrangement. This allows the stator windings 120 to be respectively secured between the laminate back 112 and the laminate feet 124. A cylindrical coordinate (*r*, *θ, z*) frame of reference is also shown in Figure 1 for the motor-stator mechanism 100. The respective surfaces of tooth/foot key interface arrangement are designed to prevent movement of the laminate feet 124 relative to the laminate teeth 114 in a radial (*r*) direction and a circumferential (0) direction.

It should be understood that although the partial view of Figure 1 shows three laminate teeth 114 with respective stator windings 120, the motor-stator mechanism 100 has a cylindrical configuration, with additional laminate teeth and stator windings located in a symmetrical circumferential arrangement in the motor-stator mechanism 100. The laminate structures of motor-stator mechanism 100 are made of electrically conductive materials, such as silicon steel, iron cobalt steel, and the like.

In some embodiments, a plurality of insert structures 126 can be respectively positioned between laminate feet 124. The insert structures 126 can be made of an electrically nonconductive material, such as various insulator materials. In other embodiments, such an insulator is not needed.

In addition, a potting material 130 can be disposed around the stator windings 120 to fill in gaps of the stator structure 110. The potting material 130 can be selected from epoxy resins, polyurethane resins, silicone compounds, acrylic compounds, and the like. When applied, the potting material 130 flows around the stator windings 120 to fill in the gaps of the stator structure 110. The potting material 130 is then cured, replacing the air around the stator windings 120 with a hardened thermally conductive material.

Further, the motor-stator mechanism 100 includes at least one rotatable magnet 134 that is positioned internal to the stator structure 110 in cylindrical configuration around a rotor (not shown). The magnet 134 is located adjacent to and spaced apart from the laminate feet 124. A composite rotor sleeve 136, which is not electrically conductive, can be placed on an outer side of the magnet 134 that is facing the laminate feet 124. The stator windings 120 and laminate structures are configured to direct an electro-magnetic field to the magnet 134.

During operation of the motor-stator mechanism 100, the tooth/foot key interface arrangement, provided by the key structures 116 of the laminate teeth 114 and the key grooves 125 of the laminate feet 124, is configured to increase a thermal resistance in a first (undesirable) heat path 140 toward the laminate feet 124 and the magnet 134. The tooth/foot key interface arrangement is also configured to decrease a thermal resistance in a second (desirable) heat path 142 toward and out of the laminate back 112. For example, the tooth/foot key interface arrangement provides that the first heat path 140 has a first thermal resistance and the second heat path 142 has a second thermal resistance that is less than the first thermal resistance. This feature reduces an operating temperature of the motor-stator mechanism 100, and increases a power density of an electric motor operated with the motor-stator mechanism 100.

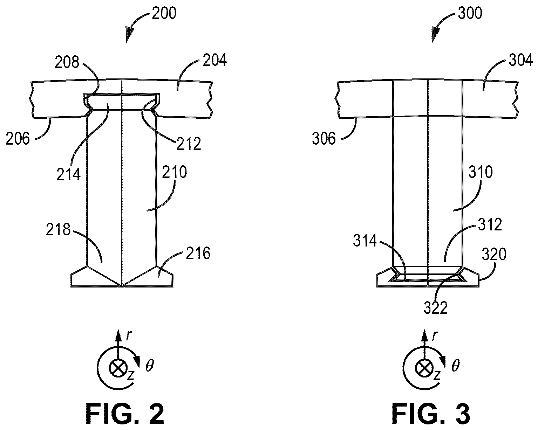

Figure 2 illustrates a partial axial view of a conventional stator laminate 200, for use in a motor-stator mechanism of an electric motor. The stator laminate 200 includes a laminate back 204 having a radially inward side 206 that defines a key opening 208. A laminate tooth 210 incudes a key surface 212 at a proximal end 214 thereof. A laminate foot 216 is integrally formed on a distal end 218 of the laminate tooth 210. The laminate back 204 and the laminate tooth 210 are coupled together by engaging the key surface 212 with the key opening 208. This laminate key configuration results in the laminate tooth 210 extending radially inward from the laminate back 204.

It should be understood that although Figure 2 shows a single laminate tooth 210, the stator laminate 200 has a cylindrical configuration, with additional laminate teeth located in a symmetrical circumferential arrangement and extending radially inward from the laminate back 204 using the laminate key configuration at various tooth/back key interfaces. A cylindrical coordinate (*r*, *θ, z*) frame of reference is also shown in Figure 2 for the stator laminate 200.

The laminate key configuration of stator laminate 200 causes an undesirable increase in thermal resistance along a desired primary heat path, which is in a radially outward direction from the interior of the stator laminate 200 toward the laminate back 204.

Figure 3 illustrates a partial axial view of a stator laminate 300, for use in a motor-stator mechanism of an electric motor, according to one embodiment of the present approach. The stator laminate 300 includes a laminate back 304 having a radially inward side 306, and a laminate tooth 310 integrally formed on the radially inward side 306, such that the laminate tooth 310 extends radially inward from the laminate back 304. A distal end 312 of the laminate tooth 310 includes a key structure 314. A laminate foot 320 has a key groove 322. The laminate foot 320 is coupled with the distal end 312 of the laminate tooth 310 by engaging the key groove 322 with the key structure 314 to produce a laminate key configuration.

It should be understood that although Figure 3 shows a single laminate tooth 310, the stator laminate 300 has a cylindrical configuration, with additional laminate teeth located in a symmetrical circumferential arrangement and extending radially inward from the laminate back 304, with the laminate key configuration at the various foot/tooth key interfaces. A cylindrical coordinate (*r*, *θ, z*) frame of reference is also shown in Figure 3 for the stator laminate 300.

The key interfaces of the laminate key configuration of stator laminate 300 cause a desirable decrease in thermal resistance along a desired primary heat path, which is in a radially outward direction from the interior of the stator laminate 300 toward the laminate back 304.

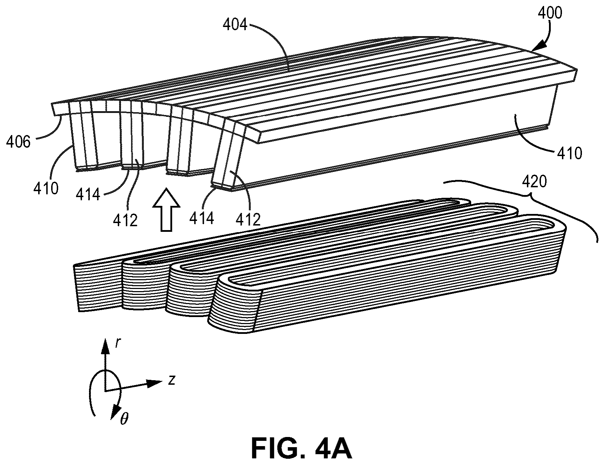

Figures 4A-4C illustrate an exemplary method for assembling a stator for a motor-stator mechanism of an electric motor. As shown in Figure 4A, a stator laminate 400 is formed to include a laminate back 404 having a radially inward side 406. A set of laminate teeth 410 are integrally formed on the radially inward side 406, such that the laminate teeth 410 extend radially inward from the laminate back 404. Distal ends 412 of the laminate teeth 410 include respective key structures 414. A set of stator windings 420 are also formed and sized to respectively surround each of the laminate teeth 410.

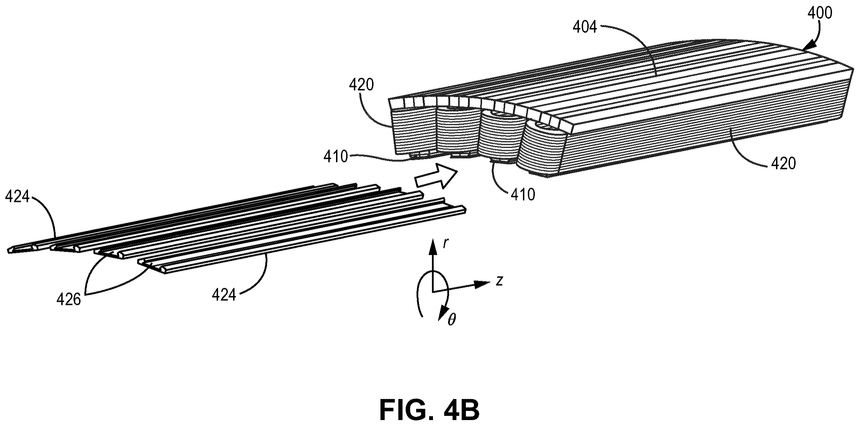

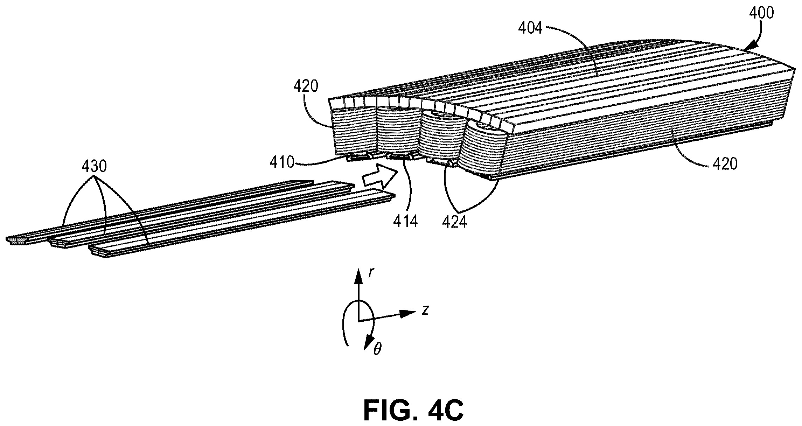

The stator windings 420 are respectively inserted onto the laminate teeth 410 for coupling to laminate back 404, as shown in Figure 4B. A plurality of elongated laminate feet 424 are formed and sized to respectively engage with each of the laminate teeth 410. Each of the laminate feet 424 has a key groove 426 along a length thereof. The laminate feet 424 are coupled with the distal ends 412 of the laminate teeth 410 by sliding the laminate feet 424 onto the laminate teeth 410, such that the respective key groove 426 is coupled with the respective key structure 414 to produce a tooth/foot key interface arrangement. This secures the stator windings 420 in place around the each of the laminate teeth 410, as shown in Figure 4C.

In some embodiments, a plurality of elongated insert structures 430 can be formed of insulator materials and sized to be respectively positioned between the laminate feet 424. The insert structures 430 can be slid into respective gaps between the laminate feet 424 adjacent to an inner radii of the stator windings 420, to aid in securing the laminate feet 424 in place and create a smooth inner radius of the stator assembly. It should be noted that some machines can operate correctly without an insulator such as the insert structures 430.

In addition, a potting material (not shown) can be applied around the stator windings 420 to fill in gaps of the stator assembly. When cured, the potting material aids in securing the components of the stator assembly. A cylindrical coordinate (*r*, *θ,* z) frame of reference is also shown in Figures 4A-4C.

### Example Embodiments

Example 1 includes an assembly comprising: a stator structure including a laminate back, and a plurality of laminate teeth extending inwardly from an inner surface of the laminate back, wherein a distal end of each of the laminate teeth includes a respective key structure; a set of stator windings respectively surrounding each of the laminate teeth; and a plurality of laminate feet each having a respective key groove that is engaged with the respective key structure of each of the laminate teeth, such that the stator structure has a tooth/foot key interface arrangement, wherein the stator windings are respectively secured between the laminate back and the laminate feet; wherein the tooth/foot key interface arrangement is configured to increase a thermal resistance in a first heat path toward the laminate feet, and decrease a thermal resistance in a second heat path toward the laminate back.

Example 2 includes the assembly of Example 1, further comprising a plurality of insert structures respectively positioned between the laminate feet and adjacent to the stator windings.

Example 3 includes the assembly of any of Examples 1-2, further comprising a cured potting material disposed around the stator windings.

Example 4 includes the assembly of any of Examples 1-3, wherein respective surfaces of each key structure are configured to prevent movement of the respective laminate feet relative to the laminate teeth in a circumferential direction and a radial direction.

Example 5 includes the assembly of any of Examples 1-4, wherein the laminate back has a cylindrical configuration.

Example 6 includes the assembly of any of Examples 1-5, wherein the laminate teeth have a symmetrical circumferential arrangement on the inner surface of the laminate back.

Example 7 includes the assembly of any of Examples 1-6, wherein the decrease of the thermal resistance in the second heat path reduces an operating temperature and increases a power density of an electric motor operated using the stator structure.

Example 8 includes a motor-stator mechanism, comprising: a stator structure comprising: a laminate back that extends circumferentially around a perimeter of the stator structure; and a plurality of laminate teeth that extend radially inward from an inner surface of the laminate back, wherein a distal end of each of the laminate teeth includes a respective key structure; a plurality of stator windings that respectively surround each of the laminate teeth; a plurality of laminate feet each having a respective key groove that is engaged with the respective key structure of each of the laminate teeth, such that the stator structure has a tooth/foot key interface arrangement, wherein the stator windings are respectively secured between the laminate back and the laminate feet; and a plurality of insert structures respectively positioned between the laminate feet and adjacent to the stator windings; wherein the respective key structure of each of the laminate teeth are configured to prevent movement of the respective laminate feet relative to the laminate teeth in a circumferential direction and in a radial direction; wherein the tooth/foot key interface arrangement is configured to increase a thermal resistance in a first heat path toward the laminate feet, and decrease a thermal resistance in a second heat path toward the laminate back.

Example 9 includes the motor-stator mechanism of Example 8, further comprising a cured potting material disposed around the stator windings.

Example 10 includes the motor-stator mechanism of any of Examples 8-9, wherein the laminate back has a cylindrical configuration.

Example 11 includes the motor-stator mechanism of any of Examples 8-10, wherein the laminate teeth have a symmetrical circumferential arrangement on the inner surface of the laminate back.

Example 12 includes the motor-stator mechanism of any of Examples 8-11, further comprising at least one rotatable magnet located adjacent to and spaced radially inward from the laminate feet.

Example 13 includes the motor-stator mechanism of Example 12, further comprising a composite rotor sleeve on an outer side of the at least one rotatable magnet that is facing the laminate feet.

Example 14 includes the motor-stator mechanism of any of Examples 8-13, wherein the decrease of the thermal resistance in the second heat path reduces an operating temperature and increases a power density of an electric motor operated using the stator structure.

Example 15 includes a method for assembling a motor-stator mechanism, the method comprising: constructing a stator that includes a laminate back having a radially inward side, and plurality of laminate teeth integrally formed on the radially inward side; forming a respective key structure at a distal end of each of the laminate teeth; providing a plurality of stator windings that are formed and sized to respectively surround the laminate teeth; inserting the stator windings respectively onto the laminate teeth; providing a plurality of elongated laminate feet formed with a respective key groove along a length thereof; and sliding the laminate feet respectively onto the laminate teeth, such that the respective key groove is coupled with the respective key structure, to produce a tooth/foot key interface arrangement, and to secure the stator windings in place around the laminate teeth.

Example 16 includes the method of Example 15, further comprising: providing a plurality of elongated insert structures that are formed and sized to be respectively positioned between the laminate feet; and sliding the insert structures into respective gaps between the laminate feet adjacent to an inner radii of the stator windings, to aid in securing the laminate feet in place.

Example 17 includes the method of any of Examples 15-16, further comprising: applying a potting material into gaps between the stator windings; and curing the potting material.

Example 18 includes the method of any of Examples 15-17, wherein the respective key structures of each of the laminate teeth prevent movement of the respective laminate feet relative to the laminate teeth in a circumferential direction and in a radial direction.

Example 19 includes the method of any of Examples 15-18, wherein the tooth/foot key interface arrangement is configured to increase a thermal resistance in a first heat path toward the laminate feet, and decrease a thermal resistance in a second heat path toward the laminate back.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. An assembly comprising:
a stator structure including a laminate back, and a plurality of laminate teeth extending inwardly from an inner surface of the laminate back, wherein a distal end of each of the laminate teeth includes a respective key structure;
a set of stator windings respectively surrounding each of the laminate teeth; and
a plurality of laminate feet each having a respective key groove that is engaged with the respective key structure of each of the laminate teeth, such that the stator structure has a tooth/foot key interface arrangement, wherein the stator windings are respectively secured between the laminate back and the laminate feet;
wherein the tooth/foot key interface arrangement is configured to increase a thermal resistance in a first heat path toward the laminate feet, and decrease a thermal resistance in a second heat path toward the laminate back.

2. The assembly of claim 1, further comprising a plurality of insert structures respectively positioned between the laminate feet and adjacent to the stator windings.

3. The assembly of claim 1, further comprising a cured potting material disposed around the stator windings.

4. The assembly of claim 1, wherein respective surfaces of each key structure are configured to prevent movement of the respective laminate feet relative to the laminate teeth in a circumferential direction and a radial direction.

5. The assembly of claim 1, wherein the laminate back has a cylindrical configuration.

6. The assembly of claim 5, wherein the laminate teeth have a symmetrical circumferential arrangement on the inner surface of the laminate back.

7. The assembly of claim 1, wherein the decrease of the thermal resistance in the second heat path reduces an operating temperature and increases a power density of an electric motor operated using the stator structure.

8. A method for assembling a motor-stator mechanism, the method comprising:
constructing a stator that includes a laminate back having a radially inward side, and plurality of laminate teeth integrally formed on the radially inward side;
forming a respective key structure at a distal end of each of the laminate teeth;
providing a plurality of stator windings that are formed and sized to respectively surround the laminate teeth;
inserting the stator windings respectively onto the laminate teeth;
providing a plurality of elongated laminate feet formed with a respective key groove along a length thereof; and
sliding the laminate feet respectively onto the laminate teeth, such that the respective key groove is coupled with the respective key structure, to produce a tooth/foot key interface arrangement, and to secure the stator windings in place around the laminate teeth.

9. The method of claim 8, further comprising:
providing a plurality of elongated insert structures that are formed and sized to be respectively positioned between the laminate feet; and
sliding the insert structures into respective gaps between the laminate feet adjacent to an inner radii of the stator windings, to aid in securing the laminate feet in place.

10. The method of claim 8, further comprising:
applying a potting material into gaps between the stator windings; and
curing the potting material.
